**Europäisches Patentamt**

**European Patent Office**

**Office européen des brevets**

(19)

(11) Veröffentlichungsnummer : **0 428 851 B1**

# (12) EUROPÄISCHE PATENTSCHRIFT

(45) Veröffentlichungstag der Patentschrift :
**18.08.93 Patentblatt 93/33**

(51) Int. Cl.⁵ : **B32B 27/28, B32B 27/12, E04D 5/10**

(21) Anmeldenummer : **90118777.3**

(22) Anmeldetag : **01.10.90**

(54) **Kunststoffdichtungsbahnen.**

Die Akte enthält technische Angaben, die nach dem Eingang der Anmeldung eingereicht wurden und die nicht in dieser Patentschrift enthalten sind.

(73) Patentinhaber : **SARNA PATENT- UND LIZENZ-AG**
**Industriestrasse, Postfach 12**
**CH-6060 Sarnen (CH)**

(30) Priorität : **02.10.89 CH 3567/89**

(72) Erfinder : **Dietschi, Hans Georg Karl**
**Sonnenbergstrasse 34**
**CH-6060 Sarnen (CH)**
Erfinder : **Schlaepfer, Jean-Luc Claude**
**Chuematt 3**
**CH-6072 Sachseln (CH)**
Erfinder : **Hunziker, Hanspeter**
**Ennetriederweg 11**
**CH-6060 Sarnen (CH)**

(43) Veröffentlichungstag der Anmeldung :
**29.05.91 Patentblatt 91/22**

(45) Bekanntmachung des Hinweises auf die Patenterteilung :
**18.08.93 Patentblatt 93/33**

(74) Vertreter : **Zink, Markus, Dr. et al**
**Patentanwaltsbüro Zink, Birchlistrasse 11**
**CH-8173 Riedt-Neerach (Zürich) (CH)**

(84) Benannte Vertragsstaaten :
**AT BE CH DE DK ES FR GB GR IT LI LU NL SE**

(56) Entgegenhaltungen :
**DE-A- 2 156 792**
**DE-C- 3 150 021**
**US-A- 4 827 686**

## Beschreibung

Die vorliegende Erfindung betrifft Kunststoffdichtungsbahnen, Verfahren zu ihrer Herstellung sowie deren Verwendung zum Abdichten von Bauwerken.

Eine Uebersicht über Kunststoffdichtungsbahnen ist in den Dokumenten "Basisinformation Kunststoffdichtungsbahnen", Schweizerische Baudokumentation L n 6 01234" vom März 1982, CH 4249 Blauen und "Schweizer Baublatt Nr. 45, 5. Juni 1979/Kunststoffe im Bau Nr. 86" enthalten.

In der DE PS 31 50 021 werden verschweissbare, mehrschichtige Dichtungsbahnen aus elastomeren Kunststoffen und einer Verstärkungseinlage beschrieben. Diese flexiblen Dichtungsbahnen haben jedoch den Nachteil der schwarzen Farbe, bedingt durch ihren Russgehalt. So erwärmen sich diese Bahnen durch Sonneneinstrahlung, wodurch der Perforationswiderstand beim Verlegen auf dem Dach wesentlich reduziert wird.

Andere flexible Dichtungsbahnen aus vulkanisiertem Elastomermaterial haben zwar - trotz schwarzer Farbe durch deren Russgehalt - eine genügende mechanische Beständigkeit bei erhöhter Temperatur, sind aber nicht schweissbar.

Wieder andere flexible und schweissbare Dichtungsbahnen enthalten Weichmacher (z.B. in Weich-PVC-Dichtungsbahnen) die ausmigrieren oder extrahiert werden können und dadurch eine reduzierte Alterungsbeständigkeit zeigen.

Es ist ein Ziel der vorliegenden Erfindung, die oben genannten Nachteile zu beseitigen. Es soll insbesondere ein neues, im Gebrauchstemperaturbereich von -40°C bis + 70°C flexibles Produkt mit einer Dicke (Stärke) von 0,8 mm bis 4 mm zur Verfügung gestellt werden, welches keine Weichmacher oder Bitumen enthält, und eine gute Witterungsbeständigkeit, Dimensionsbeständigkeit, und Verarbeitbarkeit, insbesondere Verschweissbarkeit, sowie eine gute chemische, biologische und Bitumen-Beständigkeit aufweist. Ebenso soll es kein Halogen und keine Schwermetallstabilisatoren enthalten. Vorzugsweise soll es auch eine reflektierende Oberfläche aufweisen.

Das neue Produkt soll so zusammengesetzt, hergestellt und für die jeweilige Anwendung entsprechend verarbeitbar sein, dass daraus ein sehr gutes Preis/Leistungsverhältnis im Vergleich zum Stand der Technik resultiert.

Ferner sollten einfache und billige Verfahren zur Herstellung dieses neuen Produktes zur Verfügung gestellt werden.

Diese Erfindung ist durch die Merkmale in den unabhängigen Ansprüchen gekennzeichnet.

Bevorzugte Ausführungsformen sind in den abhängigen Ansprüchen definiert.

Die erfindungsgemässen Kunststoffdichtungsbahnen haben hervorragende Grundeigenschaften, die sich aus der Zusammensetzung der einzelnen Komponenten und dem Herstellungsverfahren ergeben, wie sie z.B. im nachfolgenden Beispiel beschrieben sind.

Zusätzlich werden folgende, für die Erfindung charakteristische Merkmale festgestellt:
- gute thermische Alterungsbeständigkeit
- gute Witterungsbeständigkeit
- gute chemische und biologische Alterungsbeständigkeit, speziell im Kontakt mit wässrigen Medien, bituminösen Stoffen, Mikroorganismen
- gute Kälteflexibilität, geringe Versteifung bei tiefen Temperaturen
- durch Glasvlies-Einlage geringe Dimensionsänderung nach Wärmelagerung
- guter Verbund, gute Verschweissung der Schichten
- ökologische Unbedenklichkeit; keine Halogene, kein Bitumen, keine Weichmacher, keine Schwermetallstabilisatoren, keine Rauch- und/oder Geruchsbildung bei der Herstellung und der Verarbeitung, rezyklierbar, unbedenkliche Entsorgung durch Deponierung oder Verbrennung
- gute Verarbeitbarkeit, insbesondere gute Schweissbarkeit für die beschriebenen Anwendungen mit herkömmlichen Schweisstechniken und Schweissgeräten (Heissluft, Heizkeil, etc.).

Je nach Anwendung, und unter Berücksichtigung der Herstellungskosten, resp. Verkaufskosten, ist es durchaus möglich, die Oberschicht mehrschichtig zu gestalten. So kann nur der oberste Teil der Oberschicht pigmentiert sein, und der Rest der Oberschicht kann einen kostenmässig billigeren Füllstoff enthalten.

Das nachfolgende Beispiel soll die Erfindung illustrieren.

### Beispiel

Zur Herstellung einer 1,8 mm dicken Kunststoffdichtungsbahn, bei der die Oberschicht und die Unterschicht gleich beschaffen sind, wurde aus den folgenden Komponenten im einem Vertikal-Universalmischer eine Vormischung hergestellt:

| Komponenten | Gew.-% |
|---|---|
| Ethylen-Vinylacetat-Copolymer mit 18 Gew.-% Vinylacetatgehalt | 69,5 |
| Ethylen-Propylen-Dien-Terpolymer mit   72 Gew.-% Ethylen   22 Gew.-% Propylen   6 Gew.-% Dien | 23,0 |
| Pigment: Titandioxid | 2,0 |
| Stabilisatoren:   Lichtschutzmittel/Antioxidantien | 0,5 |
| Füllstoff: Kreide | 5,0 |

Diese Vormischung wurde in einem gleichlaufenden Doppelschneckenextruder plastifiziert, homogen gemischt und über eine Breitschlitzdüse (Arbeitsbreite 1 m) extrudiert. Die Materialdosierung in den Extruder erfolgte über eine Differential-Dosierwaage. Die Temperatur der aus der Breitschlitzdüse austretenden bahnförmigen Masse betrug 240°C bis 250°C. Der Ausstoss lag bei 100 kg pro Stunde.

Diese bahnförmige Masse wurde von oben in den unteren Spalt eines 3-Walzen-Glättwerkes eingeführt. Gleichzeitig lief von unten über die untere Walze das Trägermaterial, ein Glasvlies mit einem Flächengewicht von 50 g/m2, mit einer Geschwindigkeit von 1,6 m/Minute ein. Um eine vollständige Durchdringung des Trägermaterials zu erhalten, wurde mit Materialvorlage gefahren. Die Temperatur der unteren Walze betrug 90°C bis 120°C, diejenige der mittleren Walze von 50°C bis 80°C. Ueber den Spalt zwischen der unteren und mittleren Walze wurde die Dicke der Bahn von 1,0 mm eingestellt. Anschliessend wurde die Bahn über Kühlwalzen auf Raumtemperatur abgekühlt und aufgewickelt.

In einem zweiten Arbeitsgang wurde die zweite Schicht mit der im ersten Arbeitsgang hergestellten Bahn untrennbar verschweisst. Das Vormischen, Plastifizieren, Homogenisieren und Extrudieren erfolgte in der gleichen Art und Weise wie oben beschrieben.

Die aus der Breitschlitzdüse austretende bahnförmige Masse wurde in den unteren Spalt eines 3-Walzen-Glättwerkes eingeführt. Gleichzeitig lief von unten über die untere Walze die Bahn aus dem ersten Arbeitsgang ein, wobei das Trägermaterial auf die Seite mit der Materialvorlage gerichtet war. Die Temperatur der unteren Walze betrug 30°C bis 50°C, diejenige der mittleren Walze 50°C bis 80°C. Ueber den Spalt der unteren und mittleren Walze wurde die Dicke der Bahn von 1,8 mm eingestellt. Anschliessend wurde diese Bahn über Kühlwalzen auf Raumtemperatur abgekühlt, die Ränder wurden geschnitten, und die Bahn wurde aufgerollt.

Die so erhaltene Bahn hatte folgende Eigenschaften:

EP 0 428 851 B1

| Prüfung | | Norm | Einheit | Wert |
|---|---|---|---|---|
| Bahnstärke | | DIN 53370 | mm | 1,8 |
| Reissfestigkeit | längs | DIN 53455 | $N/mm^2$ | 12 |
| | quer | | | 9 |
| Reissdehnung | längs | DIN 53455 | % | 450 |
| | quer | | | 500 |
| Faltbiegung in der Kälte | | SIA 280/2 | °C | < −50 |
| Formänderung in der Wärme | längs | SIA 280/3 | % | < 0,1 |
| | quer | | | < 0,1 |
| thermische Alterung (70 Tage, 70°C) | | SIA 280/7 | | |
| – Massenveränderung | | | % | −0,05 |
| Verhalten im Wasser (nach 8 Monaten) | | SIA 280/12 | | |
| – Wasseraufnahme | | | % | 0,84 |
| – Massenveränderung | | | % | − 0,08. |

**Patentansprüche**

1. Kunststoffdichtungsbahnen, dadurch gekennzeichnet, dass eine Oberschicht und eine Unterschicht ein dazwischen liegendes Trägermaterial derart durchdringen, dass sie miteinander verschweisst sind; und dass die Oberschicht und die Unterschicht aufgebaut sind auf der Basis wenigstens eines Copolymeren A, welches aufgebaut ist aus dem Monomeren Ethylen und einem Comonomeren, ausgewählt aus der Gruppe, bestehend aus Vinylestern einer $C_2$-bis $C_3$-Alkancarbonsäure und $C_1$-bis $C_4$-Alkylestern der Acrylsäure.

2. Kunststoffdichtungsbahnen nach Anspruch 1, dadurch gekennzeichnet, dass das (die) Copolymer(en) A kombiniert ist (sind) mit wenigstens einem Copolymeren B, welches aufgebaut ist aus dem Monomeren Ethylen und dem Comonomeren Propylen, und/oder mit wenigstens einem Terpolymeren, welches aufgebaut ist aus dem Monomeren Ethylen und dem Comonomeren Propylen und wenigstens einem Dien-Monomeren, z.B. Dicyclopentadien, 2-Ethylidennorbornen, 1,4-Hexadien, und/oder mit wenigstens einer Komponente aus der Stoffklasse der "Polyolefinischen Thermoplastischen Elastomere", insbesondere solche "Polyolefinische Thermoplastische Elastomere", bei welchen die Elastomerkomponente in teilvernetzter Form vorliegt.

3. Kunststoffdichtungsbahnen nach einem der Ansprüche 1 bis 2, dadurch gekennzeichnet, dass die Oberschicht und/oder die Unterschicht noch wenigstens ein Pigment, insbesondere Titandioxid, lichtbeständige Farbpigmente, und/oder wenigstens einen Stabilisator, insbesondere Lichtschutzmittel, Antioxidantien, und/oder wenigstens einen Füllstoff, insbesondere Kreide, Kaolin, Talkum, Quarzmehl, und/oder wenigstens ein Verarbeitungshilfsmittel, insbesondere Gleitmittel, z.B. Glyzerinmonostearat, und/oder wenigstens einen Zusatzstoff, welcher die Brennbarkeit der Kunststoffdichtungsbahnen reduziert, z.B. Aluminiumhydroxid, Magnesiumhydroxid, enthalten (enthält).

4

4. Kunststoffdichtungsbahnen nach einem der Ansprüche 1 bis 3, dadurch gekennzeichnet, dass das genannte Trägermaterial derart beschaffen ist, dass es die Dimensionsbeständigkeit der Kunststoffdichtungsbahnen im Herstellungsverfahren und/oder bei der Anwendung der Kunststoffdichtungsbahnen gewährleistet, und insbesondere ein Gewebe, Gelege, Gewirke oder ein Vlies, oder beliebige Kombinationen davon, aus Kunststoff- und/oder Glasfasern ist.

5. Kunststoffdichtungsbahnen nach einem der Ansprüche 1 bis 4, dadurch gekennzeichnet, dass die in Anspruch 1 erwähnten Copolymeren A aufgebaut sind aus
   - 70 bis 99 Gew.-%, vorzugsweise 75 bis 88 Gew.-%, Ethylen-Monomer und
   - 1 bis 30 Gew.-%, vorzugsweise 12 bis 25 Gew.-%, Comonomer,
   wobei die Summe der Gew.-% 100 ist.

6. Kunststoffdichtungsbahnen nach einem der Ansprüche 1 bis 5, dadurch gekennzeichnet, dass die in Anspruch 2 erwähnten Copolymeren B aufgebaut sind aus
   - 40 bis 80 Gew.-%, vorzugsweise 55 bis 70 Gew.-%, Ethylen-Monomer und
   - 20 bis 60 Gew.-%, vorzugsweise 30 bis 45 Gew.-%, Propylen-Comonomer,
   wobei die Summe der Gew.-% 100 ist.

7. Kunststoffdichtungsbahnen nach einem der Ansprüche 1 bis 6, dadurch gekennzeichnet, dass die in Anspruch 2 erwähnten Terpolymeren aufgebaut sind aus
   - 40 bis 80 Gew.-%, vorzugsweise 65 bis 75 Gew,-%, Ethylen-Monomer und
   - 20 bis 60 Gew.-%, vorzugsweise 20 bis 26 Gew.-%, Propylen-Comonomer und
   - 2 bis 12 Gew.-%, vorzugsweise 4 bis 8 Gew.-%, Dien-Monomer,
   wobei die Summe der Gew.-% 100 ist.

8. Kunststoffdichtungsbahnen nach einem der Ansprüche 1 bis 7, dadurch gekennzeichnet, dass die in Anspruch 2 erwähnten "Polyolefinischen Thermoplastischen Elastomere" eine Härte im Bereich von 50 bis 80 Shore A haben.

9. Kunststoffdichtungsbahnen nach einem der Ansprüche 1 bis 8, dadurch gekennzeichnet, dass die Oberschicht und/oder Unterschicht
   - 30 bis 100 Gew.-% Copolymer(e) A, und
   - 0 bis 40 Gew.-% Copolymer(e) B und/oder Terpolymere und/oder "Polyolefinische Thermoplastische Elastomere", und/oder
   - 0 bis 15 Gew.-% Pigment, und/oder
   - 0 bis 5 Gew.-% Stabilisator, und/oder
   - 0 bis 25 Gew.-% Füllstoff, und/oder
   - 0 bis 5 Gew.-% Verarbeitungshilfsmittel, und/oder
   - 0 bis 60 Gew.-% Zusatzstoff, welcher die Brennbarkeit der Kunststoffdichtungsbahnen reduziert,
   enthalten (enthält), wobei die Summe der Gew.-% 100 ist.

10. Verfahren zur Herstellung von Kunststoffdichtungsbahnen nach einem der Ansprüche 1 bis 9, dadurch gekennzeichnet, dass man in einem ersten Schritt die jeweils benötigten Rezeptur-Komponenten für die erste Schicht in einem ersten Extruder plastifiziert und homogen mischt und über eine Breitschlitzdüse extrudiert, dann mit der so erhaltenen ersten bahnförmigen Masse in einem ersten Spalt zwischen zwei Walzen unter Einwirkung von Druck das einlaufende Trägermaterial von einer Seite her durchdringt, und danach im gleichen Arbeitsgang on-line in einem zweiten Schritt die jeweils benötigten Rezeptur-Komponenten für die zweite Schicht in einem zweiten Extruder plastifiziert und homogen mischt und über eine Breitschlitzdüse extrudiert, dann mit der so erhaltenen zweiten bahnförmigen Masse in einem zweiten Spalt zwischen zwei Walzen unter Einwirkung von Druck die aus dem ersten Schritt erhaltene, einlaufende Bahn von der anderen Seite her verschweisst; und gegebenenfalls die so erhaltene Kunststoffdichtungsbahn kühlt, und/oder prägt, und/oder kaschiert, und/oder schneidet, und/oder wickelt.

11. Verfahren zur Herstellung von Kunststoffdichtungsbahnen nach einem der Ansprüche 1 bis 9, dadurch gekennzeichnet, dass man in einem ersten Arbeitsgang die jeweils benötigten Rezeptur-Komponenten für die erste Schicht in einem Extruder plastifiziert und homogen mischt und über eine Breitschlitzdüse extrudiert, dann mit der so erhaltenen ersten bahnförmigen Masse in einem Spalt zwischen zwei Walzen unter Einwirkung von Druck das einlaufende Trägermaterial von einer Seite her durchdringt und das so erhaltene Produkt kühlt und aufwickelt, und danach in einem zweiten Arbeitsgang off-line die jeweils benötigten Rezepturkomponenten für die zweite Schicht in einem Extruder plastifiziert und homogen mischt und über eine Breitschlitzdüse extrudiert, dann mit der so erhaltenen zweiten bahnförmigen Masse in einem Spalt zwischen zwei Walzen unter Einwirkung von Druck die aus dem ersten Arbeitsgang erhaltene, einlaufende Bahn von der andern Seite her verschweisst; und gegebenenfalls die so erhaltene Kunstoffdichtungsbahn kühlt, und/oder prägt, und/oder kaschiert, und/oder schneidet, und/oder wickelt.

12. Verwendung der Kunststoffdichtungsbahnen nach einem der Ansprüche 1 bis 9 zur Abdichtung von Bauwerken, insbesondere von Hoch-, Tief- und Ingenieurbauten, vorzugsweise als Dachabdichtung von Flachdächern und Steildächern, welche ganz oder teilweise bewittert sind, oder als Abdichtung gegen drückendes und nichtdrückendes Wasser, welche nicht der Bewitterung ausgesetzt ist, wie z.B. beim Umkehrdach oder beim humusierten oder begeh- und/oder befahrbaren Flachdach, oder als Abdichtung auf Brücken, Galerien, Unterführung, oder als Abdichtung im Tunnelbau oder als Abdichtung im Dammbau.

## Claims

1. Polymeric waterproofing and roofing membranes, characterized in that an upper layer and a lower layer penetrate a carrier material lying in between in such a way that they are welded together, and that the upper layer and the lower layer are composed on the basis of at least one copolymer A, which is composed of the monomer ethylene and a comonomer selected from the group consisting of vinyl esters of a $C_2$ to $C_3$ alkane carboxylic acid and $C_1$ to $C_4$ alkyl esters of acrylic acid.

2. Polymeric waterproofing and roofing membranes according to claim 1, characterized in that the copolymer(s) A is (are) combined with at least one copolymer B, which is composed of the monomer ethylene and the comonomer propylene, and/or with at least one terpolymer, which is composed of the monomer ethylene and the comonomer propylene and at least one diene monomer, for example, dicyclopentadiene, 2-ethylidene-norbornene, 1,4-hexadiene, and/or with at least one component of the substance class of the "polyolefinic thermoplastic elastomers", in particular such "polyolefinic thermoplastic elastomers", in which the elastomer component is present in partially cross-linked form.

3. Polymeric waterproofing and roofing membranes according to one of claims 1 to 2, characterized in that the upper layer and/or the lower layer contain(s) additionally at least one pigment, in particular titanium dioxide, lightfast pigments, and/or at least one stabilizer, in particular screening agents, antioxidants, and/or at least one filler, in particular chalk, kaolin, talcum, quartz powder, and/or at least one processing aid, in particular lubricants, for example, glycerine monostearate, and/or at least one additive which reduces the flammability of the polymeric waterproofing and roofing membranes, for example, aluminum hydroxide or magnesium hydroxide.

4. Polymeric waterproofing and roofing membranes according to one of claims 1 to 3, characterized in that said carrier material is of such a nature, that it ensures the dimensional stability of the polymeric waterproofing and roofing membranes in their production process and/or during the application of the polymeric waterproofing and roofing membranes, and is in particular a woven fabric, a non-woven fabric, a web or a fleece, or any combination thereof, made of plastic and/or glass fibres.

5. Polymeric waterproofing and roofing membranes according to one of claims 1 to 4, characterized in that the copolymers A, mentioned in claim 1, are composed of
   - 70 to 99 % by weight, preferably 75 to 88 % by weight, of ethylene monomer and
   - 1 to 30 % by weight, preferably 12 to 25 % by weight, of comonomer,
   whereby the total of the % by weight is 100.

6. Polymeric waterproofing and roofing according membranes according to one of claims 1 to 5, characterized in that the copolymers B, mentioned in claim 2, are composed of
   - 40 to 80 % by weight, preferably 55 to 70 % by weight, of ethylene monomer and
   - 20 to 60 % by weight, preferably 30 to 45 % by weight, of propylene comonomer,
   whereby the total of the % by weight is 100.

7. Polymeric waterproofing and roofing membranes according to one of claims 1 to 6, characterized in that the terpolymers, mentioned in claim 2, are composed of
   - 40 to 80 % by weight, preferably 65 to 75 % by weight, of ethylene monomer and

- 20 to 60 % by weight, preferably 20 to 26 % by weight, of propylene comonomer, and
- 2 to 12 % by weight, preferably 4 to 8 % by weight, of diene monomer,

whereby the total of the % by weight is 100.

8. Polymeric waterproofing and roofing membranes according to one of claims 1 to 7, characterized in that the "polyolefinic thermoplastic elastomers", mentioned in claim 2, have a hardness in the range from 50 to 80 Shore A.

9. Polymeric waterproofing and roofing membranes according to one of claims 1 to 8, characterized in that the upper layer and/or the lower layer contain(s)
- 30 to 100 % by weight of copolymer(s) A, and
- 0 to 40 % by weight of copolymer(s) B and/or terpolymers and/or "polyolefinic thermoplastic elastomers", and/or
- 0 to 15 % by weight of pigment, and/or
- 0 to 5 % by weight of stabilizer, and/or
- 0 to 25 % by weight of filler, and/or
- 0 to 5 % by weight of processing aid, and/or
- 0 to 60 % by weight of additive which reduces the flammability of the polymeric waterproofing and roofing membranes,

whereby the total of the % by weight is 100.

10. A process for the production of the polymeric waterproofing and roofing membranes according to one of claims 1 to 9, characterized in that in a first step, the corresponding recipe ingredients required for the first layer are plasticized in a first extruder, mixed to render them homogeneous and extruded through a sheeting die, then penetrating the incoming carrier material from one side with the so obtained first sheet-like mass in a first pass between two mill rolls under the influence of pressure, and then in the same operation, on-line, in a second step, the corresponding recipe ingredients required for the second layer are plasticized in a second extruder, mixed to render them homogeneous and extruded through a sheeting die, then welding the incoming membrane obtained from the first step, from the other side with the so obtained second sheet-like mass in a second pass between two mill rolls under the influence of pressure; and occasionally the so obtained polymeric waterproofing and roofing membranes are cooled, and/or embossed, and/or backed, and/or cut, and/or reeled.

11. A process for the production of the polymeric waterproofing and roofing membranes according to one of claims 1 to 9, characterized in that in a first step, the corresponding recipe ingredients required for the first layer are plasticized in an extruder, mixed to render them homogeneous and extruded through a sheeting die, then penetrating the incoming carrier material from one side with the so obtained first sheet-like mass in a pass between two mill rolls under the influence of pressure, and then cooling and reeling the so obtained product, and then in a second step, off-line, the corresponding recipe ingredients required for the second layer are plasticized in an extruder, mixed to render them homogeneous and extruded through a sheeting die, then welding the incoming membrane obtained from the first step, from the other side with the so obtained second sheet-like mass in a pass between two mill rolls under the influence of pressure; and occasionally the so obtained polymeric waterproofing and roofing membranes are cooled, and/or embossed, and/or backed, and/or cut, and/or reeled.

12. Use of the polymeric waterproofing and roofing membranes according to one of claims 1 to 9 for the waterproofing of buildings and constructions, in particular roofing, foundations and civil engineering works, preferably as waterproofing of flat roofs and pitched roofs which are totally or partially exposed to weathering, or as waterproofing of roofs against water under pressure and not under pressure, which are not exposed to weathering, such as for example, in inverted roofs or roof gardens, or the flat roofs pedestrian and/or vehicular traffic, or as waterproofing for bridges, galleries, underpasses or as waterproofing for tunnel construction or dam construction.

**Revendications**

1. Lés d'étanchéité en matière synthétique, caractérisés en ce qu'une couche supérieure et une couche inférieure pénètrent dans un matériau de support intermédiaire, de façon à être soudés l'un à l'autre et en ce que la couche supérieure et la couche inférieure sont réalisées à base d'au moins un copolymère A qui est à la base d'éthylène monomère et d'un comonomère choisi dans le groupe constitué des esters vinyliques d'un acide alcanecarboxylique en C2 à C3 et des esters alkyliques en C1 à C4 de l'acide acrylique.

2. Lés d'étanchéité en matière synthétique selon la revendication 1, caractérisés en ce que le ou les copolymère(s) A est (sont) combiné(s) avec au moins un copolymère B qui est à base d'éthylène monomère et de propylène comonomère et/ou avec au moins un terpolymère qui est à base d'éthylène monomère et de propylène comonomère et d'au moins un diène monomère, comme par exemple le dicyclopentadiène, le 2-éthylidène-norbornène, le 1, 4-hexadiène et/ou avec au moins un constituant choisi dans la classe des "élastomères thermoplastiques polyoléfiniques", et en particulier dans celle des "élastomères thermoplastiques polyoléfiniques" dans lesquels le composant élastomère se présente sous forme partiellement réticulée.

3. Lés d'étanchéité en matière synthétique selon l'une des revendications 1 ou 2, caractérisés en ce que la couche supérieure et/ou la couche inférieure contient (contiennent) encore au moins un piquent et en particulier du dioxyde de titane, des pigments colorés résistant à la lumière et/ou au moins un stabilisateur, et en particulier un agent de protection contre la lumière, des antioxydants et/ou au moins une matière de charge, et en particulier de la craie, du kaolin, du talc, de la farine de quartz, et/ou au moins un adjuvant de traitement, et en particulier un lubrifiant comme par exemple le monostéarate de glycérine, et/ou au moins un additif qui diminue la combustibilité des lés d'étanchéité en matière synthétique, comme par exemple de l'hydroxyde d'aluminium, de l'hydroxyde de magnésium.

4. Lés d'étanchéité en matière synthétique selon l'une des revendications 1 à 3, caractérisés en ce que le matériau support précité est conçu de façon qu'il assure la stabilité dimensionnelle des lés d'étanchéité en matière synthétique au cours du procédé de fabrication et/ou pendant l'utilisation des lés d'étanchéité en matière synthétique, et est constitué en particulier d'une trame, d'un stratifié, d'un matériau tricoté ou d'un voile ou de toute combinaison quelconque de ceux-ci formée de fibres de matière synthétique et/ou de verre.

5. Lés d'étanchéité en matière synthétique selon l'une des revendications 1 à 4, caractérisés en ce que les copolymères A mentionnés à la revendication 1 sont constitués
   - de 70 à 99% en poids, et de préférence de 75 à 88% en poids d'éthylène monomère et
   - de 1 à 30% en poids, et de préférence de 12 à 25% en poids de comonomère,
   dont la somme est égale à 100% en poids.

6. Lés d'étanchéité en matière synthétique selon l'une des revendications 1 à 5, caractérisés en ce que les copolymères B mentionnés à la revendication 2 sont constitués
   - de 40 à 80% en poids, et de préférence de 55 à 70% en poids d'éthylène monomère et
   - de 20 à 60% en poids, et de préférence de 30 à 45% en poids de propylène-comonomère,
   dont la somme est égale à 100% en poids.

7. Lés d'étanchéité en matière synthétique selon l'une des revendications 1 à 6, caractérisés en ce que les terpolymères mentionnés à la revendication 2 sont constitués
   - de 40 à 80% en poids, et de préférence de 65 à 75% en poids d'éthylène monomère et
   - de 20 à 60% en poids, et de préférence de 20 à 26% en poids de propylène-comonomère, et
   - de 2 à 12% en poids, et de préférence de 4 à 8% en poids de diène-monomère,
   dont la somme est égale à 100% en poids.

8. Lés d'étanchéité en matière synthétique selon l'une des revendications 1 à 7, caractérisés en ce que les élastomères thermoplastiques polyoléfiniques mentionnés à la revendication 2 présentent une dureté comprise dans la gamme de 50 à 80 Shore A.

9. Lés d'étanchéité en matière synthétique selon l'une des revendications 1 à 8, caractérisés en ce que la couche supérieure et/ou la couche inférieure contient (contiennent)
   - de 30 à 100% en poids de copolymère(s) A, et
   - de 0 à 40% en poids de copolymère(s) B et/ou de terpolymères et/ou d'élastomères thermoplastiques polyoléfiniques, et/ou
   - de 0 à 15% en poids de pigments, et/ou

- de 0 à 5% en poids de stabilisateur, et/ou
- de 0 à 25% en poids de matière de charge, et/ou
- de 0 à 5% en poids d'adjuvant de traitement, et/ou
- de 0 à 60% en poids d'additif, qui diminue la combustibilité des lés d'étanchéité en matière synthétique,

leur somme étant égale à 100% en poids.

10. Procédé de fabrication de lés d'étanchéité en matière synthétique selon l'une des revendications 1 à 9, caractérisé en ce que l'on plastifie et mélange de manière homogène les constituants de la composition nécessaires pour la première couche au cours d'une première étape dans une première extrudeuse et qu'on effectue l'extrusion dans une filière à fente large, en ce qu'on fait pénétrer la première masse en forme de bande ainsi obtenue dans un premier intervalle entre deux cylindres sous l'action de la pression par un côté, dans le matériau de support entrant et que, au cours d'une deuxième étape, simultanément, on plastifie et mélange de manière homogène dans une deuxième extrudeuse les constituants de la composition nécessaires pour la deuxième couche et qu'on effectue l'extrusion dans une filière à fente large et que, dans un deuxième intervalle entre deux cylindres, sous l'action de la pression, on soude la deuxième masse en forme de bande ainsi obtenue avec la bande qui entre en provenant de la première étape, par l'autre côté de celle-ci et que l'on refroidit éventuellement le lé d'étanchéité en matière synthétique ainsi obtenu et/ou qu'on l'estampe et/ou qu'on le stratifie et/ou qu'on le découpe et/ou qu'on l'enroule.

11. Procédé de fabrication de lés d'étanchéité en matière synthétique selon l'une des revendications 1 à 9, caractérisé en ce que l'on plastifie et mélange de manière homogène les constituants de la composition nécessaires pour la première couche au cours d'une première étape dans une première extrudeuse et qu'on effectue l'extrusion dans une filière à fente large, en ce qu'on fait pénétrer la première masse en forme de bande ainsi obtenue dans un premier intervalle entre deux cylindres sous l'action de la pression par un côté, dans le matériau de support entrant et que l'on refroidit et enroule le produit ainsi obtenu puis, dans une deuxième étape, indépendamment, on plastifie et mélange de manière homogène dans une extrudeuse les constituants de la composition nécessaires pour la deuxième couche et qu'on effectue l'extrusion dans une filière à fente large et que, dans un intervalle entre deux cylindres, sous l'action de la pression, on soude la deuxième masse en forme de bande ainsi obtenue avec la bande qui entre en provenant de la première étape, par l'autre côté de celle-ci et que l'on refroidit éventuellement le lé d'étanchéité en matière synthétique ainsi obtenu et/ou qu'on l'estampe et/ou qu'on le stratifie et/ou qu'on le découpe et/ou qu'on l'enroule.

12. Utilisation des lés d'étanchéité en matière synthétique selon l'une des revendications 1 à 9, pour rendre étanche les constructions, et en particulier les constructions du bâtiment et du génie civil, souterraines et techniques, de préférence sous forme d'étanchéité de toitures pour toitures plates et toitures en pente qui sont partiellement ou totalement soumises à l'action des intempéries, ou comme étanchéité contre l'eau sous pression et sans pression sans exposition aux intempéries, comme c'est le cas par exemple pour les toitures inversées ou pour les toitures plates recouvertes de terre et/ou pouvant être utilisées par les piétons et/ou les véhicules ou comme étanchéité pour les ponts, les galeries, les passages souterrains ou comme étanchéité dans la construction des tunnels ou comme étanchéité dans la construction des barrages.